# EUROPÄISCHE PATENTSCHRIFT

(11) **EP 1 967 471 B1**
(45) Veröffentlichungstag und Bekanntmachung des Hinweises auf die Patenterteilung: **11.01.2012**
(21) Anmeldenummer: 08102026.5
(22) Anmeldetag: 26.02.2008
(51) Int. Cl.: B65G 47/00

(54) **Prüfeinrichtung für ein Transportsystem für Stückgutbehälter**
Testing device for a transport system for freight containers
Dispositif de contrôle d'un système de transport pour des récipients de marchandises

(30) Priorität: 06.03.2007 DE 102007011231
(43) Veröffentlichungstag der Anmeldung: 10.09.2008
(73) Patentinhaber: SIEMENS AKTIENGESELLSCHAFT, 80333 München (DE)
(72) Erfinder: Kropf, Wilhelm, Brooklyn, NY 11231 (US)

(56) Entgegenhaltungen:
- US-A- 3 164 126
- US-A- 4 742 931

## Beschreibung

Die Erfindung betrifft eine Prüfeinrichtung für ein Transportsystem für Stückgutbehälter, insbesondere für Gepäckbehälter, die auf einer im wesentlichen horizontalen angetriebenen Förderbahn durch eine weitläufig verzweigt verlegte Förderanlage bewegbar sind.

Transportsysteme der eingangs beschriebenen Art werden beispielsweise verwendet, um von Reisenden aufgegebenes Fluggepäck innerhalb des Flughafens zu transportieren und bestimmungsgemäß zu sortieren. Anhand von abgreifbaren Informationen wird das in Behältern transportierte Gepäck seinen Bestimmungsorten zugeleitet.

Bekannte Anlagen dieser Art besitzen Förderbahnen mit mindestens zwei parallel voneinander beabstandeten, in vertikalen Ebenen endlos umlaufenden Fördergurten, von denen mindestens ein Fördergurt angetrieben ist. Die Fördergurte sind zumeist als Zahnriemen ausgeführt und greifen zum Antrieb in entsprechend gezahnte angetriebene Umlenkräder ein. Auf diesen Fördergurten liegen die Stückgutbehälter auf und werden durch Reibschluss mitgenommen. Zur Führung der Stückgutbehälter auf der Förderbahn sind Führungszapfen oder -räder an der Unterseite des Stückgutbehälters angebracht, die in eine zwischen den Fördergurten verlaufende Führungsschiene eingreifen und den Stückgutbehälter, insbesondere auch in Kurvenstrecken und Weichen, leiten.

Die Förderbahnen selbst werden aus einer Vielzahl von Einzelförderern und Komponenten abschnittweise zusammengesetzt, welchen zusammen mit Kurvenstrecken, Weichen, Steigungs- und Gefällestrecken, Übergängen und Be- und Entladestationen ein sehr komplexes System bilden. Infolge der hohen Beanspruchung unterliegt die Systeme naturgemäß auch dem Verschleiß, der sich sowohl an den Anlagen selbst, wie auch an den Stückgutbehältern zeigt. Letztere sind gewöhnlich mindestens teilweise aus Kunststoff, um Gewicht zu sparen und die erforderliche Antriebsenergie gering zu halten.

Da Anlagen der beschriebenen Art, insbesondere Fluggepäcktransport- und Sortieranlagen eine besonders hohe Verfügbarkeit aufweisen müssen, sind Ausfälle der Anlage aufgrund von verschleißbedingten Beschädigungen nicht tolerierbar. Es ist dafür Sorge zu tragen ist, dass Fehler und Störungen in der Anlage sehr frühzeitig erkannt werden und Schäden behoben werden, bevor es zu Ausfällen kommt, die die gesamte Anlage stilllegen. Das setzt aber voraus, dass die Fehler- und Verschleißquellen sehr frühzeitig erkannt werden, so dass eine vorbeugende Wartung der Anlage durchgeführt werden kann.

Aufgabe der vorliegenden Erfindung ist die Schaffung einer Prüfeinrichtung in einem Transportsystem der eingangs beschriebenen Art, mit dem zu einem sehr frühen Zeitpunkt mögliche Fehlerquellen und Schäden innerhalb der Anlage, die zu einem nicht mehr tolerierbaren Verschleiß oder zu Beschädigungen von Anlagenkomponenten oder Stückgutbehältern führen würden, erkannt und behoben werden.

Die Aufgabe wird durch eine Prüfeinrichtung gelöst, die durch mindestens eine auf der Förderbahn bewegbare Prüfungseinheit gekennzeichnet ist, die in ihren äußeren Abmessungen im Wesentlichen einem in der Förderanlage verwendeten Stückgutbehälter einspricht und die mit verschiedenen Sensoren und/oder Messeinrichtungen für unterschiedliche Messzwecke und Messorte innerhalb der Förderanlage sowie mit einem Energieversorgungssystem für die Sensoren und/oder Messeinrichtungen ausgestattet ist.

Die erfindungsgemäße Prüfeinrichtung ersetzt die bisher übliche aufwändige visuelle Suche nach möglichen Fehlerstellen in der Anlage im Trial- and Error-Verfahren. Das bisher übliche systematische Begehen der gesamten Anlage durch Fachleute und das vorbeugende Austauschen oder Reparieren verdächtiger Teile, die zu einer Beschädigung der Stückgutbehälter hätten führen können, wird somit vermieden.

Da bisher häufig die Ursache von Schäden nicht sofort lokalisierbar war, mussten die Stückgutbehälter entweder aufgrund ihrer Schäden zyklisch ausgetauscht oder die beschädigten Bereiche repariert bzw. verstärkt werden. Häufig sind innerhalb einer Anlage aber eine Vielzahl von Störungsstellen vorhanden. Hier bringt die vorgeschlagene Prüfeinrichtung eine erhebliche Verbesserung, weil sie eine vorbeugende Wartung im Bereich festgestellter Schwachstellen der Anlage ermöglicht.

In einem Besonders einfach ist es, wenn nach einem Merkmal der Erfindung die Basis für die Prüfeinheit ein Standard-Stückgutbehälter ist, auf dessen Unterseite um eine vertikale Achse drehbare Führungsräder in eine Führungsschiene eingreifen, die zwischen zwei parallelen, den Stückgutbehälter tragenden Fördergurten der Förderbahnen verläuft. Die Prüfeinrichtung selbst ist also wie ein Stückgutbehälter gestaltet, und kann anstelle eines solchen Stückgutbehälters durch die Anlage geschickt werden, um mit Hilfe der Sensoren und/oder Messeinrichtungen die wünschenswerten Untersuchungen durchzuführen.

Nach einem weiteren Merkmal der Erfindung ist vorgesehen, auf der Prüfeinheit mindestens eine Erfassungseinheit mit Datenlogger und Messprogramm zur Erfassung und Speicherung der von den Sensoren und/oder Messeinrichtungen erhaltenen physikalischen Messdaten vorzusehen. Der Datenlogger speichert die Messwerte und ermöglicht später durch Auslesend er gespeicherten Daten Fehlerstellen und ggf. Fehlerquellen zu erkennen, um gezielt diese Fehlerquellen ausschalten zu können.

Vorzugsweise ist der Datenlogger eine Eingabeeinheit mit einer Spannungsversorgung der Sensoren und/oder Messeinrichtungen vorgeordnet, die gewöhnlich aus einer Batterieeinheit besteht.

Es ist nach einem weiteren Merkmal der Erfindung vorgesehen, die Eingabeeinheit und/oder den Datenlogger mit Einrichtungen zum Lokalisieren der Messorte innerhalb der Förderanlage zu verknüpfen. Diese Verknüpfung ermöglicht es, beim Auslesen der Messdaten festzustellen, an welcher Stelle der Anlage diese Messdaten aufgenommen worden sind, um ggf. vorhandene Fehlerquellen und deren räumliche Positionierung innerhalb der Anlage zu erkennen.

Die auf der Prüfeinrichtung angeordneten Sensoren und/oder Messsysteme können vielfältiger Art sein, so wird vorgeschlagen, auf der Prüfeinrichtung ein Kraftsensorensystem anzuordnen, das zur Ermittlung der beim Durchfahren der Förderanlage auf die Führungsrollen des Stückgutbehälters in drei Achsen wirkenden Kräfte in Größe und Richtung ermittelt. Die auf die Führungsrollen wirkenden Kräfte sind ein deutliches Indiz dafür, wo mögliche Ungleichmäßigkeiten in der Anlage zu Stößen oder Schlägen führen können, die sich zerstörend auf Anlagenteile oder Teile des Stückgutbehälters auswirken.

Des Weiteren sind triaxiale Beschleunigungssensoren zur Ermittlung der auf den Stückgutbehälter beim Durchfahren der Förderanlage wirkenden Beschleunigungskräfte vorgesehen. Dabei kann es sich sowohl um positive wie auch negative Beschleunigungen handeln, die einen Aufschluss darüber geben, wie sich der Stückgutbehälter durch die Anlage bewegt.

Da sich die Führungsrollen unterhalb des Stückgutbehälters in den Führungsschienen konstruktionsbedingt an den beiden inneren Seitenwänden der Führungsschiene abwechselnd anlegen und dabei ihre Drehrichtung ändern, ist es informativ zu wissen, wann die Führungsrollen sich mit welchen Drehzahlen und in welchen Drehrichtungen drehen und wann und wo sie beschleunigt oder abgebremst werden. Auch diese Informationen liefert das Drehzahlerfassungssystem zur späteren Auswertung hinsichtlich Verschleiß und/oder Beschädigung der Erfassungseinheit.

Ebenfalls Informationen über die Beanspruchung der Führungsrollen und damit deren Verschleiß liefern Temperatureinheiten zur Erfassung der Temperatur im Bereich der Führungsrollen. Wird beispielsweise festgestellt, dass die Führungsrollen besonders stark erhitzt werden, so hätte dies auch einen Einfluss auf das Beschichtungsmaterial der Rollen und dessen Verschleiß.

Um den Messort, an dem die Prüfungseinheit ein Messsignal aufgenommen und gespeichert hat zu lokalisieren, ist es möglich, Wegzähleinrichtungen vorzusehen. In einer einfachen Variante besteht eine Wegzähleinrichtung aus einem an der Prüfungseinheit angeordneten Lichttaster, über den markante Bereiche der Anlage erkennbar sind, deren örtliche Zuordnung bekannt ist. So kann der Lichttaster beispielsweise die zwischen zwei Fördererabschnitten vorhandenen Spalte erfassen und über die bekannte Länge eines Fördererabschnittes und die Anzahl der erfassten Spalt den Weg errechnen, den die Prüfeinheit innerhalb der Anlage zurückgelegt bzw. genommen hat.

Alternativ ist auch denkbar, an der Prüfeinheit Informationsgeber anzuordnen, die von in der Anlage installierten Lesegeräten erfasst sind, so dass festgestellt werden kann, wo innerhalb der Anlage sich die Prüfeinheit befindet.

Schließlich ist auch denkbar, auf der Prüfeinheit eine Videokamera zu installieren, die die Anlage erfasst und über markante Markierungen innerhalb der Anlage die Position feststellt.

Ein Verfahren zum Prüfen eines Transportsystems mit Hilfe einer vorstehend beschriebenen Prüfeinheit ist dadurch gekennzeichnet, dass die Prüfeinheit die Förderanlage durchfährt und dabei programmgesteuert mindestens einen Teil der auf die Prüfeinrichtung wirkenden physikalischen Einflüsse zusammen mit dem Ort ihrer Messung erfasst und zur späteren Auswertung speichert oder zur unmittelbaren Auswertung weiterleitet. Mit diesem Verfahren wird es erstmals möglich, gezielte Analysen der Beanspruchung und Belastung der Förderanlage und der Stückgutbehälter durchzuführen und damit eine vorbeugende Wartung vorzunehmen und ggf. sogar eine gezielte und fundierte Produktverbesserung zu ermöglichen.

Bisher war es nur schwer möglich, auftretende Beschädigungen an einem Stückgutbehälter durch Fehlbelastungen aus System-und Montagefehlern innerhalb der Anlage zu diagnostizieren. Zu solchen Fehlbelastungen kann es beispielsweise durch defekte Antriebe und Schalteinheiten kommen, Montagefehler sind auch beispielsweise fehlerhafte Übergänge oder Ausrichtungen, die zu Kanten an den Führungsbahnen führen, welche wiederum starken Verschleiß hervorrufen.

Die Erfindung und das erfindungsgemäße Verfahren ermöglichen über die Intensität und die Art der Fehlbelastungen konkrete Aussagen zu machen, um derartigen Fehlbelastungen gezielt entgegenzuwirken.

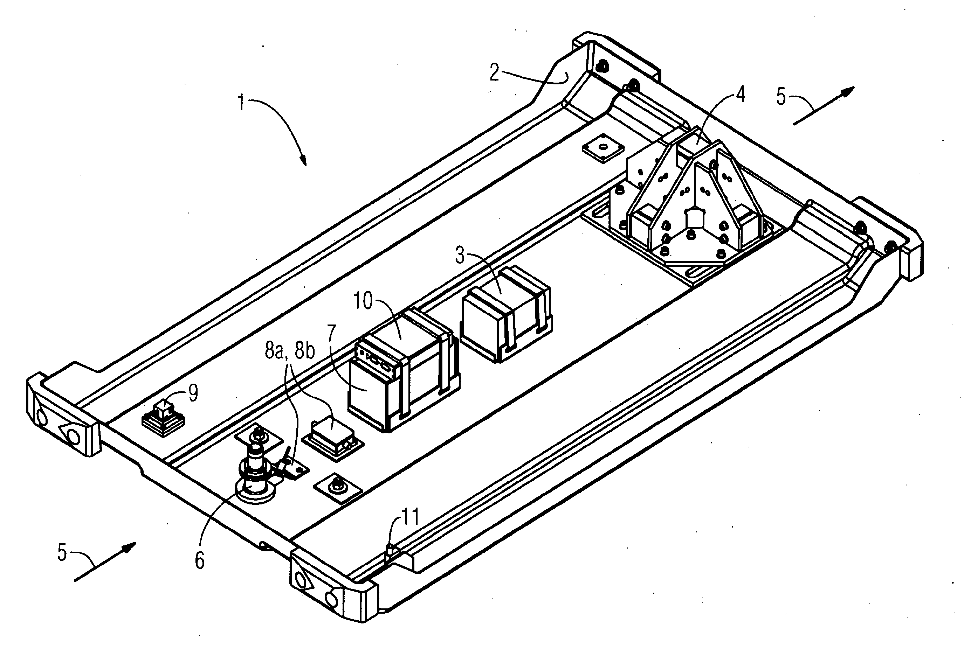

Ein Ausführungsbeispiel der erfindungsgemäßen Prüfeinrichtung ist in der Zeichnung dargestellt und wird nachfolgend beschrieben.

In der einzigen Zeichnungsfigur ist die Prüfeinrichtung schematisch dargestellt und insgesamt mit 1 bezeichnet. Sie weist die äußere Form und die Abmaße eines Stückgutbehälters auf, wie sie in großer Anzahl in der Anlage vorhanden sind. Erkennbar sind auf der oberen Schale 2 des Stückgutbehälters eine Reihe von Sensoren und/oder Messeinrichtungen angeordnet, die von dem Batteriesystem 3 gespeist werden. An dem (in der Zeichnung) rechten Ende der Schale 2 des Stückgutbehälters ist ein Kraftsensorsystem 4 erkennbar, das mit der unterhalb des Stückgutbehälters (nicht dargestellten) zur Transportrichtung 5 der Prüfeinrichtung 1 zentrisch angeordneten Führungsrolle verbunden ist, um die auf die Führungsrolle in drei Ebenen wirkenden Kräfte zu messen, während die Führungsrolle in der (nicht dargestellten) Führungsschiene der Förderanlage geführt ist. Von diesen Führungsrollen ist jeweils eine im vorderen Bereich und eine im hinteren Bereich des Stückgutbehälters angeordnet. Die Führungsrolle im hinteren Bereich ist mit dem Drehzahlerfassungssystem 6 verbunden, das in der Lage ist, sowohl die Drehrichtung, die Geschwindigkeit und die Beschleunigung der Führungsrolle aufzunehmen und der Erfassungseinheit 7 zuzuleiten. Neben dem Drehzahlerfassungssystem 6 ist die Temperaturmesseinheit 8a, 8b angeordnet, die aus dem Temperatursensor 8a und dem Messgerät 8b besteht. Auf der hinteren Seite des Stückgutbehälters ist ein triaxialer Beschleunigungssensor angeordnet, der die Beschleunigungs- und Verzögerungswerte der Prüfeinrichtung 1 beim Durchfahren der Anlage erfasst und damit die Möglichkeit eröffnet, unbeabsichtigte Verzögerungen innerhalb der Anlage festzustellen, um anhand der gleichfalls erfassten Örtlichkeit gezielt nach deren Ursachen zu forschen. Die Erfassungseinheit 7 ist mit einem Signalkonditionierer 10 verknüpft, der die erhaltenen Messsignale in speicherbare Informationen wandelt, die nach Auslesen des Loggers zur Verfügung stehen. Zum Speichern der Daten können bekannte Speichermedien Verwendung finden, beispielsweise können herkömmliche Datenspeicherkarten oder Plattenspeicher vorgesehen sein, die über Schnittstellen auslesbar und mit geeigneter Software ausgewertet werden können. Der Datenlogger ist für seinen Einsatz konfigurierbar, um beispielsweise Start- und Endzeiten der Messung, die Messintervalle usw. festzulegen. Der Datenlogger kann einen oder mehrere Kanäle besitzen, wenn mehrere Sensoren angeschlossen werden sollen.

## Patentansprüche

1. Prüfeinrichtung für ein Transportsystem für Stückgutbehälter,
insbesondere für Gepäckbehälter,
die auf einer im wesentlichen horizontalen angetriebenen Förderbahn durch eine weitläufig verzweigt verlegte Förderanlage bewegbar sind,
**gekennzeichnet durch**
mindestens eine auf der Förderbahn bewegbare Prüfeinheit (1), die in ihren äußeren Abmessungen im Wesentlichen einem in der Förderanlage verwendeten Stückgutbehälter entspricht und
die mit verschiedenen Sensoren und/oder Messeinrichtungen (4, 6, 8, 9) für unterschiedliche Messzwecke und Messorte innerhalb der Förderanlage sowie mit einem Energieversorgungssystem (3) für die Sensoren und/oder Messeinrichtungen (4, 6, 8, 9) ausgestattet ist.

2. Prüfeinrichtung für ein Transportsystem nach Anspruch 1, **dadurch gekennzeichnet, dass**
die Basis für die Prüfeinheit (1) ein Standard-Stückgutbehälter ist,
auf dessen Unterseite um eine vertikale Achse drehbare Führungsräder in eine Führungsschiene eingreifen,
die zwischen zwei parallelen, den Stückgutbehälter tragenden Fördergurten der Förderbahn verläuft.

3. Prüfeinrichtung für ein Transportsystem nach Anspruch 1 und 2,
**dadurch gekennzeichnet, dass**
auf der Prüfeinheit (1) mindestens eine Erfassungseinheit (7) mit Datenlogger und Messprogramm zur Erfassung und Speicherung der von den Sensoren und/oder Messeinrichtungen (4, 6, 8, 9) erhaltenen physikalischen Messerdaten vorgesehen ist.

4. Prüfeinrichtung für ein Transportsystem nach Anspruch 1 bis 3,
**gekennzeichnet durch**
eine auf der Prüfeinheit (1) angeordnete, der Datenlogge vorgeschaltete Eingabeeinheit mit einer Spannungsversorgung (3) der Sensoren und/oder Messeinrichtungen (4, 6, 8, 9).

5. Prüfeinrichtung für ein Transportsystem nach einem der Ansprüche 1 bis 4,
**dadurch gekennzeichnet, dass**
die Eingabeeinheit und/oder der Datenlogger mit Einrichtungen (11) zum Lokalisieren der Messorte innerhalb der Förderanlage verknüpft sind.

6. Prüfeinrichtung für ein Transportsystem nach einem der Ansprüche 1 bis 5,
**gekennzeichnet durch**
ein auf der Prüfeinheit (1) angeordnetes Kraftsensorsystem (4) zur Ermittlung der beim Durchfahren der Förderanlage auf die Führungsrollen des Stückgutbehälters in drei Achsen wirkenden Kräfte in Größe und Richtung.

7. Prüfeinrichtung für ein Transportsystem nach einem der Ansprüche 1 bis 6,
**gekennzeichnet durch**
einen triaxialen Beschleunigungssensor (9) zur Ermittlung der auf die Prüfeinheit (1) beim Durchfahren der Förderanlage wirkenden Beschleunigungskräfte.

8. Prüfeinrichtung für ein Transportsystem nach einem der Ansprüche 1 bis 7,
**gekennzeichnet durch**
ein Drehzahlerfassungssystem (6) zur Ermittlung der Drehzahl, Drehrichtung und Drehbeschleunigung der Führungsrollen.

9. Prüfeinrichtung für ein Transportsystem nach einem der Ansprüche 1 bis 8,
**gekennzeichnet durch**
eine Temperatureinheit (8a. 8b) zur Erfassung der Temperatur in Bereich der Führungsrolle.

10. Prüfeinrichtung für ein Transportsystem nach Anspruch 5,
**dadurch gekennzeichnet, dass**
zum Lokalisieren des Messortes an der Prüfeinheit (1) Wegzähleinrichtungen vorgesehen sind.

11. Prüfeinrichtung für ein Transportsystem nach Anspruch 10,
**dadurch gekennzeichnet, dass**
an der Prüfeinheit Lichttaster (11) als Wegzähleinrichtungen vorgesehen sind, über die markante Bereiche der Anlage erkennbar sind, deren örtliche Zuordnung bekannt ist.

12. Prüfeinrichtung für ein Transportsystem nach Anspruch 5,
**dadurch gekennzeichnet, dass**
an der Prüfeinheit (1) Informationsgeber angeordnet sind, die von in der Anlage installierten Lesegeräten erfassbar sind.

13. Prüfeinrichtung für ein Transportsystem nach einem der Ansprüche 1 bis 7,
**dadurch gekennzeichnet, dass**
auf der Prüfeinheit eine Videokamera installiert ist.

14. Verfahren zur Prüfung eines Transportsystems mit Hilfe einer Prüfeinheit nach einem der Ansprüche 1 bis 13,
**dadurch gekennzeichnet, dass**
die Prüfeinheit die Förderanlage durchfährt und die dabei programmgesteuert mindestens einen Teil der auf die Prüfeinheit wirkenden physikalischen Einflüsse zusammen mit dem Ort ihrer Messung erfasst und zur späteren Auswertung spei-' chert oder zur unmittelbaren Auswertung weiterleitet.

15. Verfahren zur Prüfung eines Transportsystems nach Anspruch 14,
**dadurch gekennzeichnet, dass**
beim Durchfahren der Förderanlage die an der Führungsrolle orthogonal angreifenden Stütz- und Führungskräfte gemessen und der Erfassungseinheit zugeführt werden.

16. Verfahren zur Prüfung eines Transportsystems nach Anspruch 14 und 15,
**dadurch gekennzeichnet, dass**
die positiven und negativen Beschleunigungswerte der Prüfeinheit während seiner Fahrt durch die Förderanlage gemessen und gespeichert werden.

17. Verfahren zur Prüfung eines Transportsystems nach Anspruch 14 bis 16,
**dadurch gekennzeichnet, dass**
die Drehzahl, Drehrichtung und die Drehbeschleunigung der Führungsrolle erfasst und gespeichert werden.

18. Verfahren zur Prüfung eines Transportsystems nach Anspruch 14 bis 17,
**dadurch gekennzeichnet, dass**
zur Wegerfassung der Prüfeinheit die Anzahl der Fördererabschnitte lichtoptisch erfasst wird und anhand der Zählwerte und gespeicherter Anlagendaten in einer Recheneinheit eine Positionsbestimmung der Prüfeinheit vorgenommen wird.

19. Verfahren zur Prüfung eines Transportsystems nach Anspruch 14 bis 18,
**dadurch gekennzeichnet, dass**
die Temperatur einer Führungsrolle gemessen wird.

## Claims

1. Testing device for a transport system for piece goods containers, in particular for luggage containers, which are movable on a substantially horizontally driven conveyor track by a conveying plant which is laid in an extensively branched layout,
**characterized by**
at least one testing unit (1) movable on the conveyor track, which testing unit substantially corresponds in its external dimensions to a piece goods container used in the conveying plant
and
is equipped with various sensors and/or measuring devices (4, 6, 8, 9) for different measuring purposes and measurement sites within the conveying plant, as well as with an energy supply system (3) for the sensors and/or measuring devices (4, 6, 8, 9).

2. Testing device for a transport system according to Claim 1,
**characterized in that**
the basis for the testing unit (1) is a standard piece goods container,
on the bottom side of which guide wheels rotatable about a vertical axis engage in a guide rail running between two parallel conveyor belts of the conveyor track, which conveyor belts carry the piece goods container.

3. Testing device for a transport system according to Claims 1 and 2,
**characterized in that**
on the testing unit (1) is provided at least one registering unit (7) with data logger and measuring program for the registration and storage of the physical measurement data acquired by the sensors and/or measuring devices (4, 6, 8, 9).

4. Testing device for a transport system according to Claims 1 to 3,
**characterized by**
an input unit disposed on the testing unit (1), placed upstream of the data logger and having a power supply (3) for the sensors and/or measuring devices (4, 6, 8, 9).

5. Testing device for a transport system according to one of Claims 1 to 4,
**characterized in that**
the input unit and/or the data logger are linked to devices (11) for locating the measuring sites within the conveying plant.

6. Testing device for a transport system according to one of Claims 1 to 5,
**characterized by**
a force sensor system (4), disposed on the testing unit (1), for determining in size and direction the forces which, in the passage through the conveying plant, act upon the guide rollers of the piece goods container in three axes.

7. Testing device for a transport system according to one of Claims 1 to 6,
**characterized by**
a triaxial acceleration sensor (9) for determining the acceleration forces which, in the passage through the conveying plant, act upon the testing unit (1).

8. Testing device for a transport system according to one of Claims 1 to 7,
**characterized by**
a rotation speed registering system (6) for determining the rotation speed, rotational direction and rotational acceleration of the guide rollers.

9. Testing device for a transport system according to one of Claims 1 to 8,
**characterized by**
a temperature unit (8a, 8b) for registering the temperature in the region of the guide roller.

10. Testing device for a transport system according to Claim 5,
**characterized in that**,
for the location of the measuring site, displacement meters are provided on the testing unit (1).

11. Testing device for a transport system according to Claim 10,
**characterized in that**
light sensors (11) are provided on the testing unit as displacement meters, by which distinctive regions of the plant, the locality of which is known, are discernible.

12. Testing device for a transport system according to Claim 5,
**characterized in that**
on the testing unit (1) are disposed information displays, which can be registered by readers installed in the plant.

13. Testing device for a transport system according to one of Claims 1 to 7,
**characterized in that**
a video camera is installed on the testing unit.

14. Method for testing a transport system with the aid of a testing unit according to one of Claims 1 to 13, **characterized in that**
the testing unit passes through the conveying plant and here registers with program control at least a part of the physical influences which act upon the testing unit, together with the site of their measurement, and stores the same for subsequent analysis or forwards the same for immediate analysis.

15. Method for testing a transport system according to Claim 14,
**characterized in that**,
in the passage through the conveying plant, the supporting and guide forces acting orthogonally upon the guide roller are measured and fed to the registering unit.

16. Method for testing a transport system according to Claims 14 and 15,
**characterized in that**
the positive and negative acceleration values of the testing unit are measured and stored during its journey through the conveying plant.

17. Method for testing a transport system according to Claims 14 to 16,
**characterized in that**
the rotation speed, the rotational direction and the rotational acceleration of the guide roller are registered and stored.

18. Method for testing a transport system according to Claims 14 to 17,
**characterized in that**
for registration of the displacement of the testing unit, the number of conveyor sections is registered by photooptical means and, on the basis of the counter values and stored plant data, the position of the testing unit is determined in a processing unit.

19. Method for testing a transport system according to Claims 14 to 18,
**characterized in that**
the temperature of a guide roller is measured.

## Revendications

1. Dispositif de contrôle d'un système de transport de conteneurs de marchandises,
notamment de conteneurs de bagages,
qui peuvent être déplacés sur une voie de convoyage entraînée et sensiblement horizontale par une installation de convoyage à embranchement tout au long,
**caractérisé par**
au moins une unité ( 1 ) de contrôle, qui est mobile sur la voie de convoyage et dont les dimensions extérieures correspondent sensiblement à celles d'un conteneur de marchandises utilisé dans l'installation de convoyage, et
qui est équipé de divers capteurs et/ou dispositifs ( 4, 6, 8, 9 ) de mesure à des fins de mesures différentes et en des emplacements de mesure différents dans l'installation de convoyage, ainsi que d'un système ( 3 ) d'alimentation en énergie pour les capteurs et/ou les dispositifs ( 4, 6, 8, 9) de mesure.

2. Dispositif de contrôle d'un système de transport suivant la revendication 1,
**caractérisé en ce que**
la base de l'unité ( 1 ) de contrôle est un conteneur de marchandises standard,
sur la face inférieure duquel des roues de guidage tournant autour d'un axe vertical pénètrent dans une barre de guidage, qui s'étend entre deux courroies de convoyage, parallèles et portant le conteneur de marchandises, de la voie de convoyage.

3. Dispositif de contrôle d'un système de transport suivant la revendication 1 et 2,
**caractérisé en ce que**
sur l'unité ( 1 ) de contrôle est prévue au moins une unité ( 7 ) de détection ayant un enregistrement chronologique de données et un programme de mesure pour la détection et la mémorisation des données de mesure physique obtenues par les capteurs et/ou par les dispositifs ( 4, 6, 8, 9 ) de mesure.

4. Dispositif de contrôle d'un système de transport suivant la revendication 1 à 3,
**caractérisé par**
une unité d'acquisition disposée sur l'unité ( 1 ) de contrôle et en amont de l'enregistrement chronologique de données avec une alimentation ( 3 ) en tension des capteurs et/ou des dispositifs ( 4, 6, 8, 9) de mesure.

5. Dispositif de contrôle d'un système de transport suivant l'une des revendications 1 à 4,
**caractérisé en ce que**
l'unité d'acquisition et/ou l'enregistrement chronologique de données sont combinés dans l'installation de convoyage à des dispositifs ( 11 ) de localisation des emplacements de mesure.

6. Dispositif de contrôle d'un système de transport suivant l'une des revendications 1 à 5,
**caractérisé par**
un système ( 4 ) de capteur de forces, qui est disposé sur l'unité ( 1 ) de contrôle et qui est destiné à la détermination en grandeur et en direction des forces agissant suivant trois axes sur les rouleaux de guidage du conteneur de marchandises lors du parcours de l'installation de convoyage.

7. Dispositif de contrôle d'un système de transport suivant l'une des revendications 1 à 6,
**caractérisé par**
un capteur ( 5 ) triaxial d'accélération pour la détermination des forces de l'accélération agissant sur l'unité ( 1 ) de contrôle lors du parcours de l'installation de convoyage.

8. Dispositif de contrôle d'un système de transport suivant l'une des revendications 1 à 7,
**caractérisé par**
un système ( 6 ) de détection de vitesse de rotation pour la détermination de la vitesse de rotation, du sens de rotation et de l'accélération en rotation des rouleaux de guidage.

9. Dispositif de contrôle d'un système de transport suivant l'une des revendications 1 à 8,
**caractérisé par**
une unité ( 8a. 8b ) de température pour relever la température dans la zone des rouleaux de guidage.

10. Dispositif de contrôle d'un système de transport suivant la revendication 5,
**caractérisé en ce que**,
pour la localisation de l'emplacement de mesure, des dispositifs de compteur de trajet sont prévus sur l'unité ( 1 ) de contrôle.

11. Dispositif de contrôle d'un système de transport suivant la revendication 10,
**caractérisé en ce qu'**il est prévu, sur l'unité de contrôle, des détections ( 11 ) à spot mobile comme dispositifs de compteur de trajet par lesquelles des zones marquantes de l'installation, dont l'affectation locale est connue, peuvent être reconnues.

12. Dispositif de contrôle d'un système de transport suivant la revendication 5,
**caractérisé en ce qu'**il est disposé sur l'unité ( 1 ) de contrôle des indicateurs d'information, qui peuvent être détectés par des appareils de lecture installés dans l'installation.

13. Dispositif de contrôle d'un système de transport suivant l'une des revendications 1 à 7,
**caractérisé en ce qu'**une caméra vidéo est installée sur l'unité de contrôle.

14. Procédé de contrôle d'un système de transport à l'aide d'une unité de contrôle suivant l'une des revendications 1 à 13,
**caractérisé en ce que**
l'unité de contrôle traverse l'installation de convoyage et détecte ainsi en étant commandée par programme au moins une partie des influences physiques agissant sur l'unité de contrôle ensemble avec l'emplacement de leur mesure et les mémorise pour exploitation ultérieure ou les achemine pour exploitation directe.

15. Procédé de contrôle d'un système de transport suivant la revendication 14,
**caractérisé en ce que**,
lorsque l'installation de convoyage est parcourue, les forces d'appui et de guidage s'appliquant orthogonalement aux rouleaux de guidage sont mesurées et sont envoyées à l'unité de détection.

16. Procédé de contrôle d'un système de transport suivant la revendication 14 et 15,
**caractérisé en ce que**
les valeurs positives et négatives d'accélération de l'unité de contrôle sont mesurées et mémorisées pendant son passage dans l'installation de convoyage.

17. Procédé de contrôle d'un système de transport suivant la revendication 14 à 16,
**caractérisé en ce que**
la vitesse de rotation, le sens de rotation et l'accélération en rotation des rouleaux de guidages sont détectés et mémorisés.

18. Procédé de contrôle d'un système de transport suivant la revendication 14 à 17,
**caractérisé en ce que**
pour la détection du trajet de l'unité de contrôle, le nombre des sections de convoyage est détecté par une optique lumineuse et, au moyen des valeurs de compte et de données d'installations mémorisées, une détermination de position de l'unité de contrôle est effectuée dans une unité informatique.

19. Procédé de contrôle d'un système de transport suivant la revendication 14 à 18,
**caractérisé en ce que**
l'on mesure la température d'un rouleau de guidage.
